# EUROPEAN PATENT SPECIFICATION

(11) **EP 0 288 194 B1**
(45) Date of publication and mention of the grant of the patent: **24.06.1998**
(21) Application number: 88303251.8
(22) Date of filing: 12.04.1988
(51) Int. Cl.: G02F 1/137

(54) **Chiral liquid crystal cell**
Zelle mit chiralem Flüssigkristall
Cellule à cristal liquide chiral

(30) Priority: 13.04.1987 US 38567
(43) Date of publication of application: 26.10.1988
(73) Proprietor: TEKTRONIX, INC., Wilsonville, Oregon 97070-1000 (US)
(72) Inventor: Bos, Philip J., Portland Oregon 97225 (US)
(74) Representative: Burke, Steven David

(56) References cited:
- EP-A- 0 250 218
- WO-A-87/06020
- DD-A- 241 962
- US-A- 4 563 059
- N.A.Clark and S.T.Lagerwall, Appl. Phys. Lett. 36, pp.889-901, June 1980
- JAPAN DISPLAY '86, Proceedings of the 6th international display research conference, September 30 - October 2, 1986 T. UEMURA et al. "Alignment of Chiral Smetic C Liquid Crystal by Oblique Evapuration Method"

## Description

### Technical Field

The present invention relates to liquid crystal cells used in display devices and, particularly but not exclusively, to a high-speed ferroelectric or chiral liquid crystal cell which is capable of providing a display device having a relatively large off-axis viewing angle.

### Background of the Invention

The basic principles underlying the structure and operation of one type of high-speed ferroelectric liquid crystal display device are described by Clark and Lagerwall, Applied Physics Letters, 36 (11) 1980. The display device of Clark, et al. includes a liquid crystal cell which employs a chiral smectic C liquid crystal material. A liquid crystal material of this type is characterized as having molecules that are arranged in parallel planes and tilted at acute angles relative to the normal to such planes. The molecules are rotatable about the normal to the planes and have permanent electric dipole moments that are perpendicular to the longitudinal axes of the molecules.

The liquid crystal cell of Clark and Lagerwall includes many smectic planes which are disposed between and perpendicular to an opposed pair of parallel transparent electrode plates. Potential differences applied between the electrode plates generate in the region of the liquid crystal material electric fields that are directed toward one of the two plates. The electric fields couple with the dipole moments of the liquid crystal molecules such that the molecules assume one of at least two orientations that depend upon the directions of the electric fields. When such a liquid crystal cell is placed between a pair of neutral density linear polarizers whose transmission axes are orthogonally aligned, the molecular orientations are optically distinguishable, thereby forming a ferroelectric liquid crystal display device having a light transmitting state and an opaque state.

The liquid crystal cell of Clark and Lagerwall employs a liquid crystal material that exhibits in consecutive order the isotropic, smectic A, and smectic C phases at successively lower temperatures. Such a liquid crystal material in the isotropic phase is introduced between the pair of electrode plates and then cooled until it enters the smectic A phase. The planar arrangement of the liquid crystal molecules is obtained by repeatedly shearing the electrode plates relative to each other until the smectic planes are formed. The liquid crystal molecules contacting the electrode structures lie substantially parallel to them. The device is then cooled to the smectic C phase. A principle problem of the shearing method of alignment is the difficulty associated with the manufacturability of a device of this type.

Another method of aligning the smectic planes entails the use of a rubbed polymer alignment layer such as that described by Patel, "A Reliable Method of Alignment for Smectic Liquid Crystals" Ferroelectrics, Vol 59, p. 137, 1984. The problem with a liquid crystal cell of this type is that it often exhibits smectic plane alignment defects after the cell has been switched between the light transmission and opaque states. The smectic plane alignment defects appear as zig-zag patterns on the surface of the liquid crystal cell.

Smectic C liquid crystal cells purportedly having relatively few smectic plane alignment defects are described by Uemura, et al., Alignment of Chiral Smectic C Liquid Crystal by Oblique Evapolation [sic] Method, Japan Display '86, 464-467. Uemura, et al. employ a liquid crystal material that exhibits in consecutive order the isotropic, nematic, smectic A, and smectic C phases at successively lower temperatures. Such a liquid crystal material in the isotropic phase is positioned between a pair of opposed electrode plates which have been treated so that the directors of the liquid crystal material in contact with the electrode plates lie at pretilt angles of between 20° and 25°, the pretilt angles of the directors in contact with the two electrode plates being defined in the same rotational sense. Such a director configuration is sometimes called "anti-parallel alignment." The liquid crystal cell is then cooled so that the liquid crystal material successively enters the nematic, smectic A, and smectic C phases. Although the liquid crystal cells of Uemura, et al. are purportedly relatively free from smectic plane alignment defects, display devices incorporating such cells typically have undesirably narrow viewing angles.

The inventor of the liquid crystal cell described herein has experienced difficulty in obtaining uniform director alignment in large area liquid crystal cells employing anti-parallel director alignment. Display devices using such large area cells suffer from light leakage at various locations on the viewing surface because the nonuniform director alignment makes it impossible to align the polarization axes to achieve complete extinction.

EP-A-0250218 and GB-A-2191870 (both published after the priority date of the present application) describe cells in which chiral smectic liquid crystal material is disposed between electrode structures in smectic planes perpendicular to the planes of the structures. An embodiment is described in which the material has the successive phases: isotropic, cholesteric, smectic A and ferroelectric smectic. The smectic layers may be curved in the smectic A phase, but become perpendicular in the ferroelectric smectic phase. The material may be disposed between plates having a spacing of 2µm and have a pitch of 16.5 µm, so that there would be an appreciable twist configuration.

DD-241962-A1 discloses a chiral smectic liquid crystal cell in which the temperature of the liquid crystal material disposed between the dielectric substrates is reduced, the material being of a type such that during the temperature reduction it enters in consecutive order chiral nematic, smectic A and chiral smectic phases.

### Summary of the Invention

It would therefore, be desirable to provide a high-speed chiral liquid crystal cell that is capable of providing a display device having a relatively large off-axis viewing angle, and that is substantially free from smectic plane alignment defects. It would also be desirable to provide such a liquid crystal cell which has a large surface area and whose directors are uniformly aligned to provide a display device having a large viewing area and good light extinction properties.

Aspects of the present invention are set out in the accompanying claims.

In the preferred embodiment described below, the liquid crystal cell includes a pair of spaced-apart, opposed electrode structures having a chiral liquid crystal material captured between them. The liquid crystal material is of a type that exhibits in consecutive order isotropic, nematic, smectic A, and chiral smectic phases at successively lower temperatures. Each of the electrode structures has an inner surface with a director alignment layer deposited on it. A director is an axis specifying a local average molecular orientation. The director alignment layer of each electrode structure is conditioned so that the directors of the liquid crystal material in contact therewith align at relatively large acute tilt bias angles relative to the director alignment layer. The electrode structures are oriented so that the tilt bias angles of the directors in contact with one of the electrode structures are defined in a rotational sense which is opposite that of the tilt bias angles of the directors in contact with the other electrode structure. Such a liquid crystal cell is substantially free from smectic plane alignment defects and exhibits substantially uniform director alignment properties.

Positioning the liquid crystal cell between a pair of polarizing filters provides a display device which has a relatively wide field of view and which is substantially free from viewing surface defects. The liquid crystal cell typically functions as a bistable device having two optical states that are characterized by different orientations of the optic axis, which is determined by the orientation of the directors. The orientation of the optic axis changes in response to the direction of an electric field produced by an excitation voltage applied to the cell electrode structures. The optic axis preferably changes its orientation by 45° to provide a display device that switches optimally between a light transmitting state and an opaque state.

An arrangement embodying the present invention will now be described with reference to the accompanying drawings.

### Brief Description of the Drawings

Fig. 1 is a diagrammatic cross-sectional side view of the liquid crystal cell of the present invention.

Fig. 2 is a schematic diagram of what is . believed to be the director alignment configuration of the liquid crystal material employed in the liquid crystal cell of the present invention.

Fig. 3 is an isometric view showing the tilt of the surface noncontacting directors relative to the normal to one of the curved smectic layers of Fig. 2.

Fig. 4 is a schematic diagram of a display device that incorporates the liquid crystal cell of the present invention.

Fig. 5 shows a test apparatus for determining the viewing angle performance characteristics of the display device of Fig. 4.

Figs. 6A and 6B show the comparative relationship between the off-axis viewing angle performance characteristics of, respectively, the display device of Fig. 4 and a display device employing a liquid crystal cell with anti-parallel director alignment.

Figs. 7A and 7B show the comparative relationship between the computed off-axis viewing angle performance characteristics of a display device employing a liquid crystal cell having, respectively, curved smectic layers with director tilt bias angles of 30° and straight smectic layers with director tilt bias angles of 30°.

### Detailed Description of Preferred Embodiment

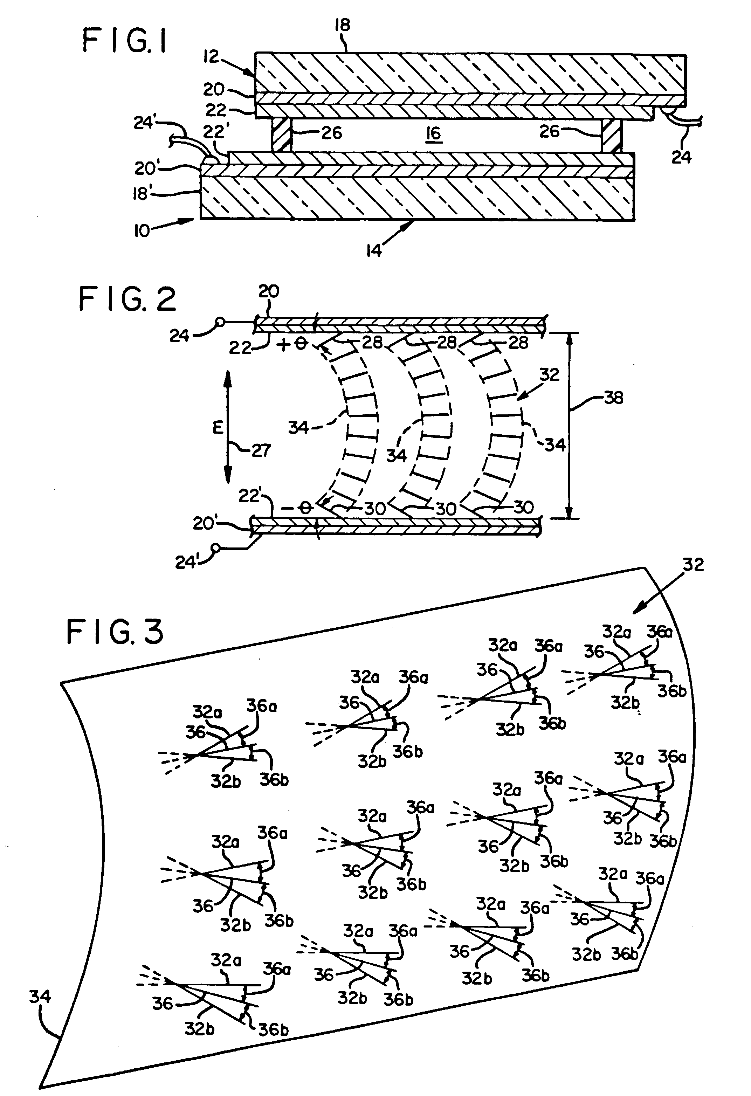

With reference to Fig. 1, a chiral liquid crystal cell 10 of the present invention comprises a pair of generally parallel, spaced-apart electrode structures 12 and 14 with a chiral liquid crystal material 16 captured between them. Liquid crystal material 16 is of a type which exhibits each of the isotropic, nematic, smectic A, and chiral smectic C phases. One such type of liquid crystal material can be, for example, liquid crystal compound number 3041 manufactured by E. Merck of Darmstadt, West Germany.. This particular liquid crystal material is especially desirable because it exhibits the chiral smectic C phase at about room temperature. This material provides, however, a cone angle (i.e., the angle a director makes relative to the normal to the smectic plane) of 15°, which is less than the desired 22.5° angle. A cone angle of 22.5° would provide the desired 45° shift in the orientation of the optic axis which provides a display device that has maximum brightness in the light transmitting state. The 15° cone angle provides, therefore, a display device of suboptimal brightness.

Electrode structure 12 includes a glass dielectric substrate 18 which has on its inner surface a layer 20 of electrically conductive but optically transparent material such as, for example, indium tin oxide. A director alignment film layer 22 is applied to conductive layer 20 and forms a boundary between electrode structure 12 and liquid crystal material 16. The alignment film surface that contacts the liquid crystal material is conditioned to promote a preferred orientation of the directors of the liquid crystal material in contact with it, as described in greater detail hereinbelow. Electrode structure 14 is of similar construction to that of electrode structure 12, and the components of electrode structure 14 corresponding to those of electrode structure 12 are shown with identical reference numerals followed by primes.

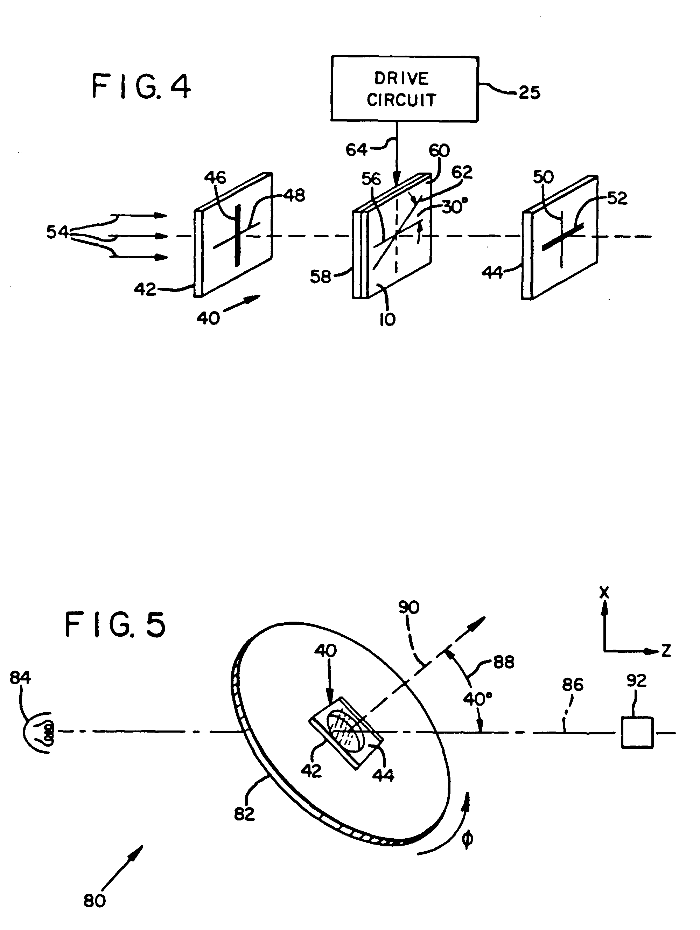

Electrode structures 12 and 14 are offset relative to each other to provide access to conductive layers 20 and 20' for connecting to terminals 24 and 24' the output conductors of a drive circuit 25 (Fig. 4) for the liquid crystal cell. Spacers 26 separate and preserve the generally parallel relation between electrode structures 12 and 14. Spacers 26 comprise any suitable material such as, for example, glass fiber.

Drive circuit 25 selectively applies one of two potential differences of opposite polarity between conductive layers 20 and 20' to generate in the region of liquid crystal material 16 an electric field that is directed toward one of the two conductive layers. The polarity of the potential difference determines to which one of the conductive layers the electric field is directed. The electric field introduced within the cell couples with the dipole moments of the liquid crystal directors such that they assume one of two orientations that depend upon the direction 27 (Fig. 2) of the electric field last generated between conductive layers 20 and 20'.

The presence of an electric field within the cell for about 100 microseconds commands the directors into one of the two orientations. Liquid crystal cell 10 is of the bistable type because the directors remain in that orientation in the absence of an electric field. As a consequence, director molecules assuming a particular orientation in response to an electric field directed toward conductive layer 20 tend to remain in that orientation until an electric field directed toward conductive layer 20' drives them into the other orientation.

Fig. 2 shows what is believed to be the alignment configurations of the directors of smectic C liquid crystal material 16 disposed within liquid crystal cell 10. Alignment film layer 22 of electrode structure 12 is conditioned so that in the nematic phase the directors 28 in contact with film layer 22 are aligned generally parallel to each other at an acute tilt bias angle +θ, which is measured in the counterclockwise sense with reference to the surface of film layer 22. Alignment film layer 22' of electrode structure 14 is conditioned so that in the nematic phase the directors 30 in contact with film layer 22' are aligned generally parallel to each other at an acute tilt bias angle -θ, which is measured in the clockwise sense with reference to the surface of film layer 22'. Liquid crystal cell 10 is fabricated, therefore, so that the surface contacting directors 28 and 30 on the respective director alignment layers 22 and 22' have tilt bias angles which are defined in opposite directions of rotation. Experimental evidence suggests that the different orientations of the surface contacting directors 28 and 30 result in the arrangement of surface noncontacting directors 32 of smectic C liquid crystal 16 in generally parallel curved smectic layers 34.

Since liquid crystal material 16 is in the smectic C phase, the directors of liquid crystal material 16 are also tilted relative to axes orthogonal to smectic layers 34. Fig. 3 is an isometric view showing the tilt of the surface noncontacting directors 32 relative to the normal 36 to one of the curved-smectic layers 34 of Fig. 2. Directors 32 form an angle 36a of about 15° of positive rotational sense relative to normal 36 into the plane of Figs. 2 and 3. Although liquid crystal material 16 is of the chiral type, liquid crystal cell is sufficiently thin (i.e., the distance 38 between film layers 22 and 22' is sufficiently small) so that directors 32 do not define an appreciable twist configuration along the thickness of the cell. Liquid crystal cell 10 is about 2 microns in thickness, which imparts half-wave retardation of green light.

The absolute values of tilt bias angles +θ and -θ are typically between about 5° and 45°, with 25°-30° being the preferred range. Tilt bias angles within these ranges provide to the liquid crystal cell directors a high pretilt alignment which improves the bistability to liquid crystal cell 10. It will be appreciated that the absolute value of tilt bias angle +θ is preferably, but not necessarily, similar to that of tilt bias angle -θ .

The high pretilt alignment of surface contacting directors 28 and 30 on respective director alignment layers 22 and 22' is preferably effected by depositing in a predetermined direction silicon monoxide or another alignment material on conductive layers 20 and 20'. Methods for depositing silicon monoxide or other alignment materials to align liquid crystal directors in a predetermined direction have been disclosed previously by others and are known to those having ordinary skill in the art. One such method, for example, is disclosed in U.S. Patent No. 4,165,923 of Janning.

Fig. 4 is a schematic diagram of a light gate 40 that incorporates liquid crystal cell 10 to form a display device. Liquid crystal cell 10 is positioned between a pair of neutral density linear polarizing filters 42 and 44, each having orthogonally aligned polarization axes. Polarizing filter 42 has a light-absorbing vertical polarization axis 46 and a light-transmitting horizontal polarization axis 48. Polarizing filter 44 has a light-transmitting vertical polarization axis 50 and a light-absorbing horizontal axis 52. Light gate 40 receives light rays 54 emanating from a light source (not shown). Light source can be, for example, a fluorescent light.

Liquid crystal cell 10 switches between first and second optical states in response to the direction of an electric field introduced within the cell. The first and second states impart substantially half-wave retardation of normally incident light of a predetermined wavelength but change the orientation of the optic axis of liquid crystal cell 10 by 30° to provide light gate 40 with, respectively, an opaque optical transmission state and a light transmitting optical transmission state. As was stated above, the optic axis is determined by the orientation of the directors.

In the first optical state, the projection 56 of the optic axis of liquid crystal cell 10 on each of its two light-communicating surfaces 58 and 60 is disposed substantially parallel to the horizontal polarization axes 48 and 52 of respective polarizing filters 42 and 44. In the second optical state, the projection 62 of the optic axis of liquid crystal cell 10 on its two light-communicating surfaces 58 and 60 is disposed substantially at a 30° angle with respect to each one of the polarization axes of polarizing filters 42 and 44. The 30° angular difference between projections 56 and 62 in the respective first and second optical states result from the nominal 15° cone angle of the directors 32 in smectic layers 34 and the reorienting of the directors by electric fields in opposite directions. In Fig. 3, directors 32 are represented as lines 32a at an angle 36a relative to normal 36 to show one orientation of the directors and, therefore, the optic axis and as lines 32b at an angle 36b relative to normal 36 to show the other orientation of the directors and, therefore, the optic axis. The electric field introduced within liquid crystal cell 10 is developed by a potential difference that appears across the outputs 64 of drive circuit 25. Outputs 64 of drive circuit 25 are connected to terminals 24 and 24' of liquid crystal cell 10.

Whenever drive circuit 25 provides a positive voltage between terminals 24 and 24', liquid crystal cell 10 is commanded into the first optical state. Normally incident light rays 54 passing through horizontal polarization axis 48 of polarizing filter 42 propagate through liquid crystal cell 10 and are substantially absorbed by horizontal polarization axis 52 of polarizing filter 44. Essentially no light exits light gate 40 under these conditions, which develops the opaque optical transmission state.

Whenever drive circuit 25 provides a negative voltage between terminals 24 and 24', liquid crystal cell 10 is commanded into the second optical state. Normally incident light rays 54 passing through horizontal polarization axis 48 of polarizing filter 42 propagate through liquid crystal cell 10 and are transmitted through vertical polarization axis 50 of polarizing filter 44. Light exits light gate 40 under these conditions, which develops the transmitting optical transmission state.

Although the directors can be aligned along a particular direction over a microscopic area, the direction typically varies by several degrees over the surface area of the cell. The above-described liquid crystal 10 exhibits superior director alignment uniformity to that of the anti-parallel cells disclosed in the prior art. Liquid crystal 10 also exhibits superior off-axis viewing angle characteristics in that there is less intensity variation in the light transmitting state and less light leakage in the opaque state as a function of viewing angle than in display systems incorporating a liquid crystal cell with anti-parallel director alignment.

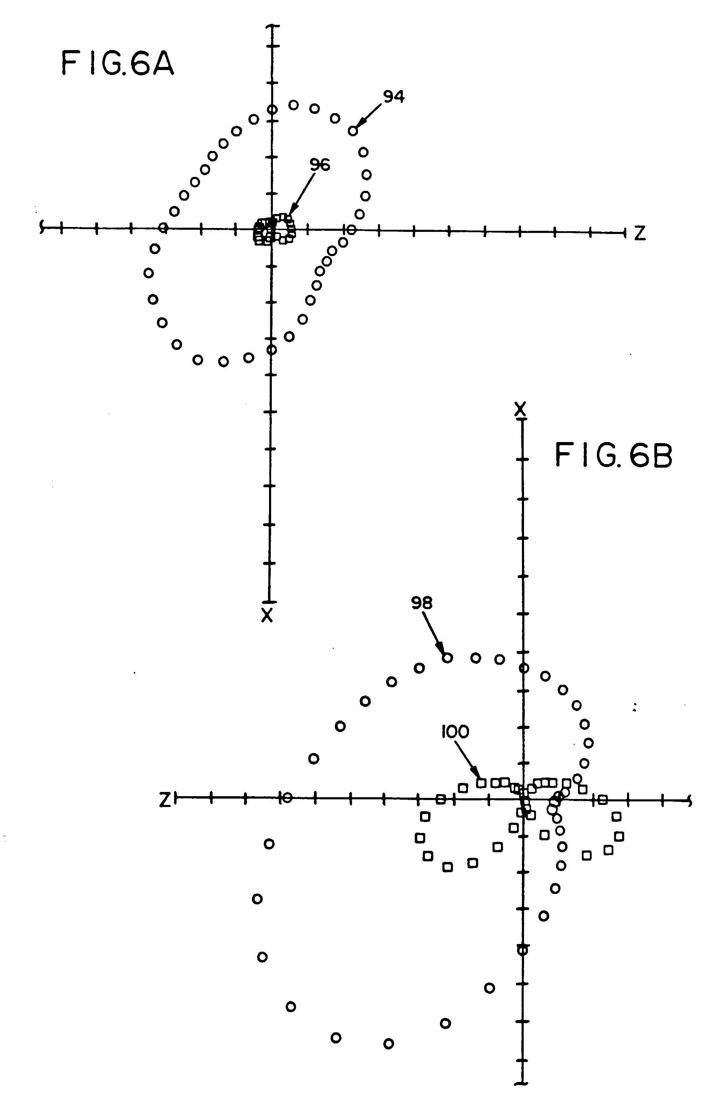

Fig. 5 shows a test apparatus 80 for determining the viewing angle performance of light gate 40. Test apparatus 80 comprises a rotating table 82 which includes a transparent portion upon which light gate 40 is mounted. A source 84 of white light emits along an axis 86 parallel light rays that strike polarizing filter 42 at an angle 88 of 40° relative to the normal 90 to the surface of light gate 40. Table 82 rotates light gate 40 to determine the transmitted light intensity as a function of the azimuthal angle φ about normal 90. A light-sensitive detector 92 positioned on axis 86 receives the light transmitted by light gate 40. The figures discussed below illustrate the viewing angle performance for a liquid crystal cell of 2 micron thickness and using the E. Merck 3041 material.

Figs. 6A and 6B show the comparative relationship between the light intensity measured in the opaque state and the transmitting state for, respectively, the liquid crystal cell 10 of the present invention and an anti-parallel aligned liquid crystal cell of the type described by Uemura et al. The data shown in Fig. 6A were acquired for light gate 40 whose liquid crystal cell 10 was oriented with respect to polarizing filters 42 and 44 so that the on-axis light transmission was minimized in the opaque light transmission state. The data shown in Fig. 6B were acquired for a liquid crystal cell of the same retardation and tilt bias angles as liquid crystal cell 10 but with antiparallel director alignment. The liquid crystal cell was positioned between a pair of neutral density linear polarizing filters with orthogonally aligned polarization axes to form a display device.

The data for Figs. 6A and 6B were acquired in accordance with the same procedures, which are described below with reference to Fig. 6A in the following manner. Light gate 40 was switched to its opaque state, and rotating table 82 rotated light gate 40 through azimuthal angles of 360°. The light measured by detector 92 was measured at 10° increments as a percentage of the maximum light transmission that could pass through light gate 40. Light gate 40 was then switched to its light transmitting state, and data were again acquired as was described above for the opaque state.

With reference to Fig. 6A, light intensity patterns 94 and 96 represent the intensity of light transmitted in, respectively, the transmitting state and the opaque state for liquid crystal cell 10. Fig. 6A shows that the light intensity in the opaque state is always less than that in the light transmitting state and that the variations in light intensity as a function of azimuthal angle for either state are insignificant.

With reference to Fig. 6B, light intensity patterns 98 and 100 represent the intensity of light transmitted in, respectively, the transmitting state and the opaque state for a liquid crystal cell having anti-parallel director alignment. Fig. 6B shows that there exist azimuthal angles for which the intensity of light transmitted in the opaque state is greater than that transmitted in the light transmitting state and that the variations in light intensity as a function of azimuthal angle for both states are significant. Fig. 6B indicates that a viewer of a device employing a liquid crystal cell having anti-parallel director alignment and presenting an image comprising dark and light pixels would notice a change in appearance of the image as the viewer varied the angle from which he viewed the display.

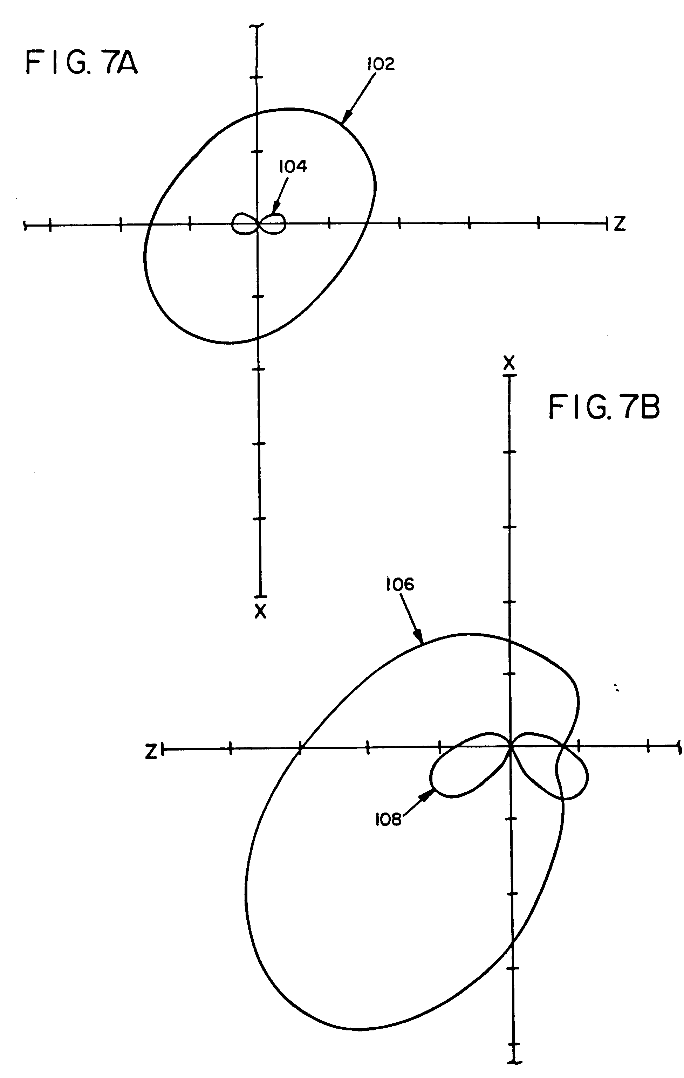

Figs. 7A and 7B show the comparative relationship between light intensity computed in the opaque state and the transmitting state for a liquid crystal cell having the director alignment configuration of liquid crystal cell 10 with curved smectic layers and planar smectic layers tilted at 30° to the surface normal. With respect to Fig. 7A, light intensity patterns 102 and 104 represent the intensity of light transmitted in, respectively, the transmitting state and the opaque state. Comparison of Fig. 7A with Fig. 6A reveals that the light intensity patterns 94 and 102 are generally the same for the light transmitting state and that light intensity patterns 96 and 104 are generally the same for the opaque state. With respect to Fig. 7B, light intensity patterns 106 and 108 represent the intensity of light transmitted in, respectively, the transmitting state and the opaque state. Comparison of Fig. 7B with Fig. 6B reveals that the light intensity patterns 98 and 106 are generally the same for the light transmitting state and that light intensity patterns 100 and 108 are generally the same for the opaque state. One would conclude, therefore, that the advantage of cells with the surface contacting director alignment of liquid crystal cell 10 may be attributed to the curvature of the smectic layers.

The bistability of smectic C liquid crystal cell 10 provides light gate 40 with a light/dark image contrast ratio of about 20:1, as compared to other smectic C display devices which have contrast ratios no greater than 4:1, which is insufficient contrast for most display applications. Moreover, the ability to switch liquid crystal cell 10 between optical states at 100 microsecond intervals facilitates the fabrication of a high contrast, high resolution liquid crystal display device having, for example, 1000 line resolution capability.

It will be obvious to those having skill in the art that many changes may be made in the above-described details of the preferred embodiment of the present invention without departing from the underlying principles thereof. For example, the chiral smectic C phase could be replaced by a chiral smectic I phase or any other chiral smectic phase. As a second example, the liquid crystal cell 10 can be switched among director configurations other than the two uniform director orientations described in the preferred embodiment, thereby to provide a multi-state device. Such a multi-state device would include director alignment twist configurations that provide light transmission states of different light intensities. The scope of the present invention should be determined, therefore, only by the following claims.

## Claims

1. A method of fabricating a chiral smectic liquid crystal cell, comprising the steps of:
applying an electrically conductive layer (20, 20') to a surface of each of two dielectric substrates (18, 18') to form a pair of electrode structures (12, 14), at least one of the dielectric substrates being optically transparent;
conditioning each of the surfaces of the conductive layers so that when in the nematic phase the directors of liquid crystal material in contact therewith align in a predetermined direction;
positioning the pair of electrode structures so that the conductive layers thereof are in spaced-apart and face-to-face relation;
introducing between the electrode structures a chiral liquid crystal material of a type which exhibits nematic, smectic A, and chiral smectic phases at successively lower temperatures; and
controlling the temperature of the liquid crystal material so that it enters in consecutive order the nematic, the smectic A, and the chiral smectic phases;
characterised in that the distance between the electrode structures (12, 14) is sufficiently small that, in the nematic phase, the directors (32) of the liquid crystal material do not define an appreciable twist configuration in the direction of cell thickness, and the directors (28) in contact with the conditioned layer of one electrode structure form acute tilt bias angles (+θ,) relative to the layer, which angles are defined in a rotational sense opposite that of the acute tilt bias angles (-θ) of the directors (30) in contact with the conditioned layer of the other electrode structure.

2. The method of claim 1 in which the conductive layers on the electrode structures are conditioned by depositing silicon monoxide (22, 22')on the conductive layers.

3. The method of claim 1 or 2 in which the chiral smectic phase is of the smectic C type.

4. The method of claim 1, 2 or 3 in which the conditioned layers of the pair of electrode structures are conditioned so that the acute tilt bias angles (+θ, -θ) have absolute values of between about 5° and 45° relative to the conditioned layers.

5. The method of claim 1, 2, 3 or 4 in which the chiral liquid crystal material is introduced at a temperature corresponding to the isotropic phase of the liquid crystal material.

6. A chiral smectic liquid crystal cell, comprising:
a liquid crystal material in the chiral smectic phase captured between the inner surfaces of first and second spaced-apart, opposed electrode structures (12, 14), the liquid crystal material being of a type which exhibits in consecutive order nematic, smectic A, and chiral smectic phases at successively lower temperatures and the inner surface of each electrode structure including an alignment layer (22, 22');
characterised in that the electrode structures (12, 14) are separated by a distance which is sufficiently small that, in the nematic phase, the directors (32) of the liquid crystal material do not define an appreciable twist configuration in the direction of cell thickness, and the directors (28) in contact with the alignment layer of the first electrode form acute tilt bias angles (+θ) relative to the alignment layer, which angles are defined in a rotational sense opposite that of the acute tilt bias angles (-θ) formed by directors (30) in contact with the alignment layer (22, 22') of the second electrode structure.

7. A cell according to claim 6 in which the molecules are arranged substantially uniformly in multiple non-planar smectic layers (34) of similar shape, each of the smectic layers being of non-planar shape and extending from the inner surface of one of the electrode structures to the inner surface of the other electrode structure, the smectic layers intersecting the inner surfaces of each electrode structure (12, 14) at a respective acute angle (+θ, - θ), the acute angle formed at the intersection of the inner surface of the first electrode structure being of opposite rotational sense to that of the acute angle formed at the intersection on the inner surface of the second electrode structure.

8. A cell according to claim 7 in which the acute angles (+θ, -θ) are of substantially equal absolute values.

9. A cell according to claim 8 in which the absolute values of the acute angles (+θ, -θ) are greater than or equal to 5°.

10. A cell according to claim 6, 7, 8 or 9 in which the smectic layers (34) have changes in inclination located generally halfway between the inner surfaces of the electrode structures (12, 14).

11. A cell according to any one of claims 6 to 10 in which the alignment layer (22, 22') comprises silicon monoxide.

12. A cell according to any one of claims 6 to 11 in which the alignment layers are conditioned so that the acute tilt bias angles (+θ, -θ) have absolute values of between about 5° and 45°.

13. A cell according to any one of claims 6 to 12 in which the chiral smectic phase is of the smectic C type.

14. A cell according to any one of claims 6 to 13, wherein said first and second electrode structures (12, 14) are generally parallel.

15. A chiral smectic liquid crystal display device, comprising:
a pair of light polarizing filters (42, 44) having orthogonally related polarization states;
a chiral smectic liquid crystal cell (10) as claimed in any one of claims 6 to 14, the cell being positioned between the light polarization filters; and means (25) for selectively introducing within the cell first and second electric fields that develop respective first and second optical states, the first optical state positioning the directors in a first orientation to promote light transmission through the display device and the second optical state positioning the directors in a second orientation to prevent light transmission through the display device.

16. A display device according to claim 15 in which the light polarizing filters (42, 44) comprise neutral density linear polarizing filters.

17. A display device according to claim 15 or 16 in which the two optical states of the liquid crystal cell provide optical retardation of the same amount.

18. A display device according to claim 17 in which the opposed electrode structures (12, 14) are separated by a distance that develops substantially half-wave retardation of light of a predetermined wavelength.

## Patentansprüche

1. Verfahren zur Herstellung einer chiralen smektischen Flüssigkristallzelle, mit folgenden Schritten:
Aufbringen einer elektrisch leitenden Schicht (20, 20') auf einer Oberfläche eines jeden von zwei dielektrischen Substraten (18, 18') zur Bildung eines Paares von Elektrodenstrukturen (12, 14), wobei mindestens eines der dielektrischen Substrate lichtdurchlässig ist;
Konditionieren einer jeden Oberfläche der leitfähigen Schichten, so daß sich in der nematischen Phase die mit diesen in Kontakt stehenden Ausrichtelemente des Flüssigkristallmaterials in einer vorbestimmten Richtung ausrichten;
Anordnen des Paares von Elektrodenstrukturen derart, daß deren leitfähige Schichten voneinander beabstandet und einander zugewandt sind;
Einfügen eines chiralen Flüssigkristallmaterials zwischen den Elektrodenstrukturen, wobei das Flüssigkristallmaterial von einem Typ ist, der bei sukzessive abnehmenden Temperaturen in die nematische Phase, in die smektische Phase A und in die chirale smektische Phase übergeht; und
Regeln der Temperatur des Flüssigkristallmaterials, so daß es der Reihe nach in die nematische Phase, in die smektische Phase A und in die chirale smektische Phase übergeht;
dadurch gekennzeichnet, daß der Abstand zwischen den Elektrodenstrukturen (12, 14) klein genug ist, daß die Ausrichtelemente (32) des Flüssigkristallmaterials in der nematischen Phase keine nennenswerte verdrehte Konfiguration in der Richtung der Dicke der Zelle einnehmen, und die mit der konditionierten Schicht einer Elektrodenstruktur in Kontakt befindlichen Ausrichtelemente (28) spitze Neigungs-Vorspannwinkel (+θ) relativ zur Schicht einnehmen, wobei diese Winkel in einem Drehsinn entgegengesetzt zu demjenigen der spitzen Neigungs-Vorspannwinkel (-θ) der mit der konditionierten Schicht der anderen Elektrodenstruktur in Kontakt befindlichen Ausrichtelemente (30) definiert sind.

2. Verfahren nach Anspruch 1, wobei die leitenden Schichten auf den Elektrodenstrukturen durch Aufbringung von Siliziummonoxid (22, 22') auf die leitenden Schichten konditioniert werden.

3. Verfahren nach Anspruch 1 oder 2, wobei es sich bei der chiralen smektischen Phase um eine smektische Phase vom Typ C handelt.

4. Verfahren nach Anspruch 1, 2 oder 3, wobei die konditionierten Schichten des Paares von Elektrodenstrukturen derart konditioniert sind, daß die spitzen Neigungs-Vorspannwinkel (+θ, -θ) Absolutwerte zwischen ca. 5° und 45° relativ zu den konditionierten Schichten haben.

5. Verfahren nach Anspruch 1, 2, 3 oder 4, wobei das chirale Flüssigkristallmaterial bei einer Temperatur eingefügt wird, welche mit der isotropen Phase des Flüssigkristallmaterials korrespondiert.

6. Chirale smektische Flüssigkristallzelle, welche folgendes umfaßt:
ein Flüssigkristallmaterial in der chiralen smektischen Phase, das zwischen den inneren Oberflächen einer ersten und zweiten, voneinander beabstandeten und einander gegenüberliegenden Elektrodenstruktur (12, 14) eingeschlossen ist, wobei es sich bei dem Flüssigkristallmaterial um ein Material des Typs handelt, das bei sukzessive abnehmenden Temperaturen der Reihe nach in die nematische Phase, in die smektische Phase A und in die chirale smektische Phase übergeht, und die innere Oberfläche einer jeden Elektrodenstruktur eine Ausrichtungsschicht (22, 22') umfaßt;
dadurch gekennzeichnet, daß die Elektrodenstrukturen (12, 14) in einem ausreichend geringen Abstand voneinander beabstandet sind, so daß die Ausrichtelemente (32) des Flüssigkristallmaterials in der nematischen Phase keine nennenswerte verdrehte Konfiguration in der Richtung der Dicke der Zelle einnehmen, und die sich mit der Ausrichtungsschicht der ersten Elektrode in Kontakt befindlichen Ausrichtelemente (28) spitze Neigungs-Vorspannwinkel (+θ) relativ zur Ausrichtungsschicht haben, wobei diese Winkel in einem Drehsinn entgegengesetzt zu demjenigen der spitzen Neigungs-Vorspannwinkel (-θ) der mit der Ausrichtungsschicht (22, 22') der zweiten Elektrodenstruktur in Kontakt befindlichen Ausrichtelemente (30) definiert sind.

7. Zelle nach Anspruch 6, wobei die Moleküle im wesentlichen gleichmäßig in mehreren nicht-ebenen smektischen Schichten (34) ähnlicher Form angeordnet sind, wobei jede dieser smektischen Schichten eine nicht-ebene Form hat und von der inneren Oberfläche einer der Elektrodenstrukturen zur inneren Oberfläche der anderen Elektrodenstruktur verläuft, wobei die smektischen Schichten die inneren Oberflächen einer jeden Elektrodenstruktur (12, 14) an einem entsprechenden spitzen Winkel (+θ, -θ) schneiden, wobei der am Schnittpunkt der inneren Oberfläche der ersten Elektrodenstruktur gebildete spitze Winkel einen entgegengesetzten Drehsinn zu demjenigen des am Schnittpunkt auf der inneren Oberfläche der zweiten Elektrodenstruktur gebildeten spitzen Winkels hat.

8. Zelle nach Anspruch 7, wobei die spitzen Winkel (+θ, -θ) im wesentlichen gleiche Absolutwerte haben.

9. Zelle nach Anspruch 8, wobei die Absolutwerte der spitzen Winkel (+θ, -θ) größer oder gleich 5° betragen.

10. Zelle nach Anspruch 6, 7, 8 oder 9, wobei die smektischen Schichten (34) Änderungen in ihrer Neigung aufweisen, die im allgemeinen auf halber Strecke zwischen den inneren Oberflächen der Elektrodenstrukturen (12, 14) lokalisiert sind.

11. Zelle nach einem der Ansprüche 6 bis 10, wobei die Ausrichtungsschicht (22, 22') Siliziummonoxid umfaßt.

12. Zelle nach einem der Ansprüche 6 bis 11, wobei die Ausrichtungsschichten derart konditioniert sind, daß die spitzen Neigungs-Vorspannwinkel (+θ, -θ) Absolutwerte zwischen ca. 5° und 45° haben.

13. Zelle nach einem der Ansprüche 6 bis 12, wobei es sich bei der chiralen smektischen Phase um eine smektische Phase vom Typ C handelt.

14. Zelle nach einem der Ansprüche 6 bis 13, wobei die erste und die zweite Elektrodenstruktur (12, 14) allgemein parallel verlaufen.

15. Chirale smektische Flüssigkristall-Anzeigevorrichtung, folgendes umfassend:
ein Paar Lichtpolarisationsfilter (42, 44) mit rechtwinklig zueinander ausgerichteten Polarisationszuständen;
eine chirale smektische Flüssigkristallzelle (10) nach einem der Ansprüche 6 bis 14, wobei die Zelle zwischen den Lichtpolarisationsfiltern angeordnet ist; und
eine Vorrichtung (25) zum selektiven Anlegen eines ersten und eines zweiten elektrischen Feldes an das Zelleninnere, durch die sich entsprechende erste und zweite optische Zustände entwickeln, wobei im ersten optischen Zustand die Ausrichtelemente in einer ersten Ausrichtung angeordnet werden, um die Lichtübertragung durch die Anzeigevorrichtung hindurch zu fördern, und im zweiten optischen Zustand die Ausrichtelemente in einer zweiten Ausrichtung angeordnet werden, um eine Lichtübertragung durch die Anzeigevorrichtung hindurch zu verhindern.

16. Anzeigevorrichtung nach Anspruch 15, wobei die Lichtpolarisationsfilter (42, 44) lineare Polarisationsfilter mit neutraler Dichte umfassen.

17. Anzeigevorrichtung nach Anspruch 15 oder 16, wobei die zwei optischen Zustände der Flüssigkristallzelle eine optische Verzögerung gleichen Betrags bewirken.

18. Anzeigevorrichtung nach Anspruch 17, wobei die gegenüberliegenden Elektrodenstrukturen (12, 14) in einem Abstand voneinander getrennt sind, durch den sich eine Verzögerung von im wesentlichen einer Halbwelle von Licht einer vorbestimmten Wellenlänge ergibt.

## Revendications

1. Procédé de fabrication d'une cellule à cristaux liquides smectiques chiraux, comprenant les étapes consistant :
à appliquer une couche électroconductrice (20, 20') sur une surface de chacun de deux substrats diélectriques (18, 18') pour former une paire de structures d'électrodes (12, 14), au moins l'un des substrats diélectriques étant optiquement transparent ;
à conditionner chacune des surfaces des couches conductrices de sorte que, lorsqu'elle est dans la phase nématique, les directeurs de la matière de cristaux liquides en contact avec celles-ci s'alignent dans une direction prédéterminée ;
à placer la paire de structures d'électrodes de sorte que les couches conductrices de celles-ci sont en relation espacée et face-à-face ;
à introduire entre les structures d'électrodes une matière de cristaux liquides chiraux d'un type qui présente des phases nématique, smectique A et chirale smectique à des températures successivement plus basses ; et
à régler la température de la matière de cristaux liquides de sorte qu'elle entre, en ordre successif, dans les phases nématique, smectique A et chirale smectique ;
caractérisé en ce que la distance entre les structures d'électrodes (12, 14) est suffisamment petite pour que, dans la phase nématique, les directeurs (32) de la matière de cristaux liquides ne définissent pas une configuration tordue appréciable dans la direction de l'épaisseur de la cellule, et que les directeurs (28) en contact avec la couche conditionnée d'une structure d'électrode forment des angles de polarisation à inclinaison aiguë (+θ), par rapport à la couche, ces angles étant définis dans un sens de rotation opposé à celui des angles de polarisation à inclinaison aiguë (-θ) des directeurs (30) en contact avec la couche conditionnée de l'autre structure d'électrode.

2. Procédé selon la revendication 1, dans lequel les couches conductrices sur les structures d'électrodes sont conditionnées en déposant du monoxyde de silicium (22, 22') sur les couches conductrices.

3. Procédé selon la revendication 1 ou 2, dans lequel la phase smectique chirale est du type smectique C.

4. Procédé selon la revendication 1, 2 ou 3, dans lequel les couches conditionnées de la paire de structures d'électrodes sont conditionnées de sorte que les angles de polarisation à inclinaison aiguë (+θ, -θ) ont des valeurs absolues entre environ 5° et 45° par rapport aux couches conditionnées.

5. Procédé selon la revendication 1, 2, 3 ou 4, dans lequel la matière de cristaux liquides chiraux est introduite à une température correspondant à la phase isotrope de la matière de cristaux liquides.

6. Cellule à cristaux liquides smectiques chiraux, comprenant :
une matière de cristaux liquides dans la phase smectique chirale capturée entre les surfaces internes des première et seconde structures d'électrodes espacées opposées (12, 14), la matière de cristaux liquides étant d'un type qui présente en ordre successif des phases nématique, smectique A et chirale smectique à des températures successivement plus basses, et la surface interne de chaque structure d'électrode incluant une couche d'alignement (22, 22') ;
caractérisée en ce que les structures d'électrodes (12, 14) sont séparées par une distance qui est suffisamment petite pour que, dans la phase nématique, les directeurs (32) de la matière de cristaux liquides ne définissent pas une configuration tordue appréciable dans la direction de l'épaisseur de la cellule, et en ce que les directeurs (28) en contact avec la couche d'alignement de la première électrode forment des angles de polarisation à inclinaison aiguë (+θ) par rapport à la couche d'alignement, ces angles étant définis dans un sens de rotation opposé à celui des angles de polarisation à inclinaison aiguë (-θ) formés par les directeurs (30) en contact avec la couche d'alignement (22, 22') de la seconde structure d'électrode.

7. Cellule selon la revendication 6, dans laquelle les molécules sont arrangées substantiellement uniformément en couches smectiques non planes multiples (34) de forme semblable, chacune des couches smectiques étant de forme non plane et s'étendant depuis la surface interne de l'une des structures d'électrodes à la surface interne de l'autre structure d'électrode, les couches smectiques rencontrant les surfaces internes de chaque structure d'électrode (12, 14) à un angle aigu respectif (+θ, -θ), l'angle aigu formé à la rencontre de la surface interne de la première structure d'électrode ayant un sens de rotation opposé à celui de l'angle aigu formé à l'intersection sur la surface interne de la seconde structure d'électrode.

8. Cellule selon la revendication 7, dans laquelle les angles aigus (+θ, -θ) ont des valeurs absolues substantiellement égales.

9. Cellule selon la revendication 8, dans laquelle les valeurs absolues des angles aigus (+θ, -θ) sont supérieures ou égales à 5°.

10. Cellule selon la revendication 6, 7, 8 ou 9, dans laquelle les couches smectiques (34) ont des changements d'inclinaison situés généralement à mi-chemin entre les surfaces internes des structures d'électrodes (12, 14).

11. Cellule selon l'une quelconque des revendications 6 à 10, dans laquelle la couche d'alignement (22, 22') comprend du monoxyde de silicium.

12. Cellule selon l'une quelconque des revendications 6 à 11, dans laquelle les couches d'alignement sont conditionnées de façon que les angles de polarisation à inclinaison aiguë (+θ, -θ) ont des valeurs absolues entre environ 5° et 45°.

13. Cellule selon l'une quelconque des revendications 6 à 12, dans laquelle la phase smectique chirale est du type smectique C.

14. Cellule selon l'une quelconque des revendications 6 à 13, dans laquelle lesdites première et seconde structures d'électrodes (12, 14) sont généralement parallèles.

15. Dispositif d'affichage à cristaux liquides smectiques chiraux, comprenant :
une paire de filtres polarisant la lumière (42, 44) ayant des états de polarisation à relation orthogonale ;
une cellule à cristaux liquides smectiques chiraux (10) telle que revendiquée dans l'une quelconque des revendications 6 à 14, la cellule étant placée entre les filtres polarisant la lumière ; et des moyens (25) pour introduire sélectivement dans la cellule des premier et second champs électriques qui développent des premier et second états optiques respectifs, le premier état optique plaçant les directeurs dans une première orientation pour favoriser la transmission de lumière au travers du dispositif d'affichage et le second état optique plaçant les directeurs dans une seconde orientation pour prévenir une transmission de lumière au travers du dispositif d'affichage.

16. Dispositif d'affichage selon la revendication 15, dans lequel les filtres polarisant la lumière (42, 44) comprennent des filtres de polarisation linéaires de densité neutre.

17. Dispositif d'affichage selon la revendication 15 ou 16, dans lequel les deux états optiques de la cellule à cristaux liquides fournissent un retard optique d'une quantité identique.

18. Dispositif d'affichage selon la revendication 17, dans lequel les structures d'électrodes opposées (12, 14) sont séparées par une distance qui développe substantiellement un retard de demi-onde d'une lumière d'une longueur d'onde prédéterminée.
